Europäisches Patentamt

European Patent Office

Office européen des brevets

(11) Numéro de publication: **0 023 457**

**A1**

## (12) DEMANDE DE BREVET EUROPEEN

(21) Numéro de dépôt: **80401098.1**

(22) Date de dépôt: **24.07.80**

(51) Int. Cl.³: **G 01 P 5/18**
G 01 F 1/68, G 01 F 1/70
G 01 P 5/00

(30) Priorité: **26.07.79 FR 7919337**

(43) Date de publication de la demande:
**04.02.81 Bulletin 81/5**

(84) Etats Contractants Désignés:
**AT BE CH DE GB IT LI NL SE**

(71) Demandeur: **Oliva, Ambro**
**180 Bd de Montmorency**
**F-95170 Deuil La Barre(FR)**

(71) Demandeur: **Joly, Luc**
**3 Place Verte**
**F-95230 Soisy S/ Montmorency(FR)**

(72) Inventeur: **Oliva, Ambro**
**180 Bd de Montmorency**
**F-95170 Deuil La Barre(FR)**

(72) Inventeur: **Joly, Luc**
**3 Place Verte**
**F-95230 Soisy S/ Montmorency(FR)**

(74) Mandataire: **CABINET BONNET-THIRION**
**95 Boulevard Beaumarchais**
**F-75003 Paris(FR)**

(54) **Procédé de mesure de vitesse d'écoulement d'un fluide par détermination de la durée de transit d'un marqueur, et débitmètre fondé sur ce procédé.**

(57) Procédé et dispositif de mesure de vitesse et débit de fluide.

Le dispositif de mesure de débit de fluide comprend un tronçon de canalisation (1) parcouru par le fluide. Un générateur d'impulsions (4) provoque périodiquement un échauffement de la résistance (2). Le fluide chauffé parvient avec un retard fonction du débit à la résistance (3) dont la valeur varie avec la température. Une bascule (8) est enclenchée par l'impulsion du générateur (4) et déclenchée par la variation de résistance (3). La capacité (10), chargée par l'impulsion du générateur (4), se décharge pendant l'enclenchement de la bascule (8).

Application à la mesure de débit de gaz dans une canalisation.

FIG.1

1

<u>Procédé de mesure de vitesse d'écoulement d'un fluide par détermination de la durée de transit d'un marqueur, et débitmètre fondé sur ce procédé.</u>

L'invention se rapporte à la mesure de la vitesse d'un fluide en écoulement, par détermination de la durée de transit d'un élément de marquage sur une longueur de base, ainsi qu'à un débitmètre fondé sur ce procédé.

Les mesures de vitesse d'écoulement de fluide dans des canalisations, et les mesures corrélatives de débit sont basées de façon courante sur les lois de la mécanique des fluides régissant les réactions entre un fluide en mouvement et un organe de mesure (Venturi, moulinet..). On utilise parfois des éléments de marquage qui accompagnent le fluide dans son déplacement, tels des flotteurs sur un cours d'eau, et on détermine la durée de transit de cet élément sur une longueur de base. Ces mesures, simples dans leur principe, sont en général très grossières.

On a mesuré des vitesses de déplacement de fluides en déterminant la vitesse de particules par effet Doppler d'un faisceau lumineux cohérent réfléchi sur ces particules. Ces mesures sont précises, mais mettent en oeuvre des appareillages coûteux, et notamment des dispositifs optiques de précision.

L'invention a pour objet un procédé de mesure de vitesse d'écoulement de fluide mettant en oeuvre des éléments de marquage, qui donne une précision comparable à celle des mesures courantes par application de la mécanique des fluides, tout en restant simple et peu coûteux.

L'invention a également pour objet un tel procédé de mesure, où l'élément de marquage est créé à partir du fluide lui-même.

A ces effets l'invention propose un procédé de mesure de la vitesse d'un fluide en écoulement, caractérisé en ce que l'on provoque périodiquement une perturbation brève d'état physique du fluide en un premier point de l'écoulement, et on décèle cette perturbation en un second point en aval du premier à une distance de base de celui-ci dans le sens de l'écoulement, en déterminant la durée séparant les instants où l'on provoque et décèle la perturbation.

Comme le fluide est en écoulement où la diffusion est faible, la perturbation d'état physique reste localisée dans le fluide pendant une période relativement importante et suit le mouvement du fluide avant de disparaître, de sorte que la mesure de vitesse sur une longueur de base convenable permet une bonne précision, et le fluide reste semblable à lui-même après disparition de la perturbation.

De préférence la perturbation est un échauffement, facile à créer et à déceler, avec de faibles écarts de température qui ne modifient pas sensiblement l'écoulement.

De préférence le fluide est un gaz, à faible inertie thermique et peu conducteur.

En variante, on peut provoquer une perturbation d'état physique du fluide en un premier point de l'écoulement, et mesurer la durée qui sépare les instants où l'on décèle la perturbation en deux points en aval du premier et distants l'un de l'autre d'une distance de base suivant le sens de l'écoulement. Les deux instants qui bornent l'intervalle de mesure se décèlent par des phénomènes de même nature, et la création de la perturbation périodique peut être autonome.

Sous un autre aspect, l'invention propose un débitmètre, notamment pour gaz comportant un tronçon de canalisation traversé par le fluide en écoulement, caractérisé en ce qu'il comporte, en un premier point du tronçon, un moyen émetteur adapté à provoquer, en réponse à une impulsion électrique, une perturbation d'état du fluide, en un second point du tronçon, en aval du premier point et espacé d'une distance de base de celui-ci suivant le sens d'écoulement un détecteur sensible à la perturbation d'état du fluide et émettant en réponse un signal de sortie, un générateur d'impulsions périodiques attaquant le moyen émetteur, et des moyens de mesure de temps enclenchés par les impulsions du générateur et déclenché par les signaux de sortie correspondants du détecteur.

Il est clair que dans une canalisation où le fluide est en écoulement, il existe une relation directe entre vitesse et débit. La répétition des déterminations au rythme du générateur d'impulsions assure une mesure sensiblement permanente du débit.

De préférence le moyen émetteur est une résistance électrique en forme de grille dans un plan de section droite du tronçon, et le détecteur est une résistance électrique à coefficient de température.

Les caractéristiques et avantages de l'invention ressortiront d'ailleurs de la description qui va suivre, à titre d'exemple, en référence aux dessins annexés dans lesquels :

la figure 1 est un schéma général d'un débitmètre selon l'invention ;

la figure 2 est un schéma d'un dispositif voltmétrique d'affichage de débit.

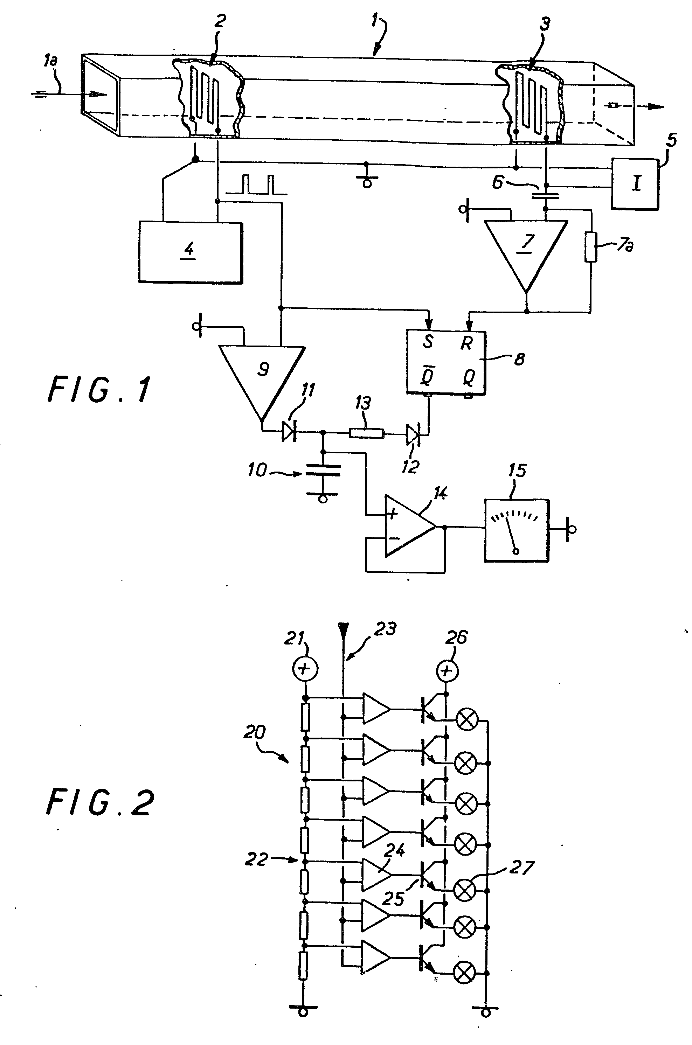

Selon la forme de réalisation choisie et représentée figure 1, un tronçon de canalisation 1 est parcouru, dans le sens de la flèche 1a par un courant de fluide. Dans cette canalisation est disposée une résistance 2 formée d'un fil fin replié pour former une grille dans un plan de section droite du tronçon 1. A une longueur de base en aval de la résistance 2 est disposée une résistance 3, formée également d'un fil fin replié en grille, et présentant un coefficient de température, c'est-à-dire que la valeur de sa résistance électrique varie de façon marquée avec la température.

Un générateur d'impulsions 4, délivre à la résistance 2 des impulsions d'énergie suffisante pour élever de façon notable la température de cette résistance, avec une période de récurrence grande devant l'inertie thermique de la résistance, et supérieure à la durée de parcours du fluide entre les résistances 2 et 3 au débit minimal mesurable du fluide.

La résistance 3 est alimentée en courant constant par une source de courant continu 5. Le courant qui parcourt la résistance 3 est suffisamment faible pour que l'élévation de température résultante soit également faible, de sorte que la température de la résistance 3 et corrélativement la tension développée à ses bornes, soient fonction essentiellement de la température du fluide dans le tronçon 1. La tension développée aux bornes de la résistance 3 est appliquée à l'entrée d'un amplificateur 7 à travers un condensateur de différenciation 6, une résistance de rétroaction 7a étant disposée entre sortie et entrée de l'amplificateur 7 pour en régler le gain.

Une bascule 8 est attaquée en enclenchement par les impulsions issues du générateur 4, et en déclenchement par la sortie de l'amplificateur 7. Le générateur 4 attaque également l'entrée d'un amplificateur 9, monté sans rétroaction en sorte de fonctionner en tout ou rien. Une capacité 10 est montée en sorte d'être chargée, à travers une diode 11, par la tension de sortie en saturation de l'amplificateur 10, et d'être déchargée progressivement à travers une résistance 13 et une diode 12 par la sortie négative de la bascule 8, qui se trouve à tension nulle par rapport à la masse lorsque la bascule est enclenchée. Un amplificateur tampon 14, à impédance d'entrée pratiquement infinie, transmet la tension de charge de la capacité 10 à un dispositif voltmétrique 15.

On peut décrire le processus de fonctionnement de la façon suivante : chaque impulsion délivrée par le générateur 4 provoque, dans la durée d'impulsion, une élévation brusque de température de la résistance 2. Après la fin d'impulsion, la résistance 2 se refroidit en cédant son énergie thermique au courant de fluide. Ce courant de fluide subit une perturbation thermique, qui comporte un front avant raide, correspondant à l'élévation de température de la résistance 2, suivi d'un flanc décroissant avec la température de cette résistance 2. Lorsque la perturbation parvient au niveau de la résistance 3 à coefficient de température, après une durée égale au quotient de la longueur de base par la vitesse du fluide, cette résistance 3 subit une variation de valeur de résistance représentative de la variation de température du fluide dans la perturbation, de sorte que la tension aux bornes est image de la variation de résistance. On remarquera que la diffusion de la chaleur dans les zones du fluide contiguës à la perturbation n'agit pratiquement que dans le sens de circulation, pour diminuer quelque peu la raideur des fronts de la perturbation.

La transmission des variations de tension aux bornes de la résistance 3 à l'amplificateur 7 à travers le condensateur 6 a lieu avec différenciation, en sorte que le front avant raide de la perturbation se traduit sur l'amplificateur 7 par une impulsion d'amplitude relativement élevée, tandis que le flanc arrière à décroissance lente se traduit par une impulsion de sens inverse et d'amplitude réduite.

L'impulsion issue du générateur 4 a simultanément enclenché la bascule 8 et chargé la capacité 10 à travers la diode 11 par l'intermédiaire de l'amplificateur 9. Dès la fin de cette impulsion la capacité 10 se décharge vers la sortie négative de la bascule 8, à travers la résistance 13 et la diode 12, tandis que la diode 11 s'oppose à la décharge vers la sortie de l'amplificateur 9. Lorsque l'amplificateur 7 émet l'impulsion correspondant à la détection du front avant de la perturbation par la résistance 3, la bascule 8 déclenche et sa sortie négative passe à une tension haute, de sorte que la capacité 10 cesse de se décharger. Comme l'amplificateur 14 présente une impédance d'entrée infinie, il transmet au dispositif voltmétrique 15 la tension aux bornes de la capacité 10 sans influer sur la charge ou la décharge de celle-ci.

Bien entendu le dispositif voltmétrique 15 est sensible soit à la tension moyenne appliquée, soit à la tension de fin de décharge, à travers un circuit approprié connu de l'homme du métier, tel qu'un intégrateur ou un échantillonneur actionné par le déclenchement de la bascule 8.

Le dispositif voltmétrique, en aval du circuit mentionné ci-dessus peut avoir la disposition représentée figure 2. Une chaîne potentiométrique 20, branchée entre une source de tension de référence 21 et masse, définit une série d'échelons de tension de référence correspondant chacun à la tension associée à un débit donné. La tension de référence de chaque échelon (tel que 22) est appliquée à une entrée d'un comparateur 24 qui reçoit sur son autre entrée la tension à mesurer appliquée au conducteur 23, commun à tous les comparateurs d'échelons. La sortie du comparateur 24 attaque la base d'un transistor branché par son collecteur à une source de tension positive 26, et attaquant par son émetteur une diode électroluminescente 27. Lorsque la tension de référence de l'échelon 22 est supérieure à la tension 23, le transistor 25 est bloqué et la diode 27 éteinte. Lorsque la tension 23 dépasse la tension de référence d'échelon 22, le comparateur 24 sature le transistor 25, et la diode 27 s'illumine.

On comprendra que, si l'on veut déclencher une alerte lorsque le débit dépasse une valeur prédéterminée, on branchera la commande du dispositif d'alerte en parallèle sur la diode luminescente de l'échelon correspondant au débit prédéterminé. Le même genre de commande, agissant en manque de tension, est utilisable pour signaler un débit inférieur à un seuil préfixé.

Bien entendu, l'invention n'est pas limitée aux exemples décrits, mais en embrasse toutes les variantes de réalisation. Notamment, pour des cas particuliers, on peut choisir une perturbation d'état du fluide décelable autre qu'un échauffement, telle par exemple qu'une ionisation, une variation d'activité chimique, une variation de conductivité électrique ou thermique.

1

REVENDICATIONS

1. Procédé de mesure de la vitesse d'un fluide en écoulement, caractérisé en ce que l'on provoque périodiquement une perturbation brève d'état physique du fluide en un premier point de l'écoulement, et on décèle cette perturbation en un second point en aval du premier à une distance de base de celui-ci dans le sens de l'écoulement, en déterminant la durée séparant les instants où l'on provoque et décèle la perturbation.

2. Procédé suivant la revendication 1, caractérisé en ce que ladite perturbation physique est un échauffement.

3. Procédé suivant une des revendications 1 ou 2, caractérisé en ce que le fluide en écoulement est un gaz.

4. Procédé de mesure de la vitesse d'un fluide en écoulement, caractérisé en ce que l'on provoque une perturbation brève d'état physique du fluide en un premier point de l'écoulement, et on décèle la perturbation en deux points en aval du premier et à une distance de base l'un de l'autre suivant le sens de l'écoulement, en déterminant la durée séparant les instants où l'on décèle la perturbation respectivement aux deux points en aval du premier.

5. Débitmètre pour fluide, notamment gaz, comportant un tronçon de canalisation traversé par le fluide en écoulement, caractérisé en ce qu'il comporte, en un premier point du tronçon, un moyen émetteur adapté à provoquer, en réponse à une impulsion électrique, une perturbation d'état du fluide, en un second point du tronçon, en aval du premier point et espacé d'une distance de base de celui-ci suivant le sens d'écoulement un détecteur sensible à la perturbation d'état du fluide et émettant en réponse un signal de sortie, un générateur d'impulsions périodiques attaquant le moyen émetteur, et des moyens de mesure de temps enclenchés par les impulsions du générateur et déclenchés par les signaux de sortie correspondants du détecteur.

6. Débitmètre selon la revendication 5, caractérisé en ce que le moyen émetteur est une résistance électrique en forme de grille dans un plan de section droite du tronçon, le moyen récepteur étant une résistance électrique à coefficient de température alimentée en courant constant.

7. Débitmètre selon la revendication 6, caractérisé en ce que les moyens de mesure de temps comportent un amplificateur branché en entrée aux bornes de la résistance à coefficient de température à travers un condensateur, une bascule avec une entrée d'enclenchement reliée au générateur d'impulsions et une entrée de déclenchement reliée à la sortie de l'amplificateur, et une capacité chargée en réponse aux impulsions issues du générateur, et déchargée à travers une résistance par la bascule enclenchée.

8. Débitmètre selon la revendication 7, caractérisé en ce qu'un moyen voltmétrique à résistance d'entrée pratiquement infinie est branché aux bornes de la capacité.

9. Débitmètre selon la revendication 8, caractérisé en ce que le moyen voltmétrique comprend une chaîne potentiométrique avec une série d'échelons de tension de référence et par échelon, un moyen comparateur recevant la tension de charge de capacité et la tension de référence d'échelon, et commandant une diode électroluminescente.

FIG.1

FIG.2

Office européen
des brevets

**RAPPORT DE RECHERCHE EUROPEENNE**

EP 80 40 1098

| **DOCUMENTS CONSIDERES COMME PERTINENTS** | | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | <u>DE - A - 1 943 034</u> (LIPPKE)<br>* Page 5, ligne 6 - page 6, ligne 13; figures *<br><br>-- | 1-3,<br>5-8 | G 01 P 5/18<br>G 01 F 1/68<br>1/70<br>G 01 P 5/00 |
| X | <u>DE - A - 2 723 809</u> (BAYER AG)<br>* Page 4, ligne 1 - page 5, ligne 22; page 7, lignes 4-11; figures *<br><br>-- | 1,2,<br>4-7 | |
| | <u>FR - A - 2 219 417</u> (NATIONAL RESEARCH DEVELOPMENT CORPORATION)<br>* Page 1, lignes 1-7; page 8, lignes 12-20; figure 1 *<br><br>-- | 1-3,<br>5-7 | DOMAINES TECHNIQUES RECHERCHES (Int. Cl. 3)<br><br>G 01 P 5/00<br>5/18<br>G 01 F 1/64<br>1/68<br>1/70 |
| | <u>FR - A - 2 049 309</u> (COMPAGNIE GENE-RALE D'ELECTRICITE)<br>* Page 2, ligne 37 - page 3, ligne 4; figures *<br><br>-- | 1,3-5 | |
| | <u>US - A - 3 688 106</u> (BRAIN)<br>* Colonne 1, lignes 15-40; co-lonne 1, ligne 61 - colonne 2, ligne 4; figure 1 *<br><br>---- | 1,3,5,<br>7 | |

CATEGORIE DES DOCUMENTS CITES

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 19-09-1980 | HANSEN |

OEB Form 1503.1   06.78